# EUROPÄISCHE PATENTSCHRIFT

(11) **EP 0 897 787 B1**
(45) Veröffentlichungstag und Bekanntmachung des Hinweises auf die Patenterteilung: **07.05.2003**
(21) Anmeldenummer: 98114346.4
(22) Anmeldetag: 30.07.1998
(51) Int. Cl.: B29C 47/04, B32B 31/30

(54) **Verfahren und Vorrichtung zur Herstellung einer mehrfarbigen Verbundfolie aus thermoplastischem Kunststoff**
Method and apparatus for making a multi-color laminated thermoplastic film
Procédé et dispositif pour la production d'un film thermoplastique multicoche multicolore

(30) Priorität: 20.08.1997 DE 19736194
(43) Veröffentlichungstag der Anmeldung: 24.02.1999
(73) Patentinhaber: Benecke-Kaliko Aktiengesellschaft, D-30419 Hannover (DE)
(72) Erfinder: Rost, Eberhard, Dr.rer.nat., 30823 Garbsen (DE); Breuksch, Ulrich, Dr. rer.nat., 29690 Lindwedel (DE); Wolff, Roland, Dr.-Ing., 30926 Seelze (DE)
(74) Vertreter: Hagemann, Heinrich, Dr.rer.nat., Dipl.-Chem.

(56) Entgegenhaltungen:
- DE-A- 2 035 578
- DE-A- 2 550 553
- DE-A- 19 530 757
- FR-A- 1 395 995
- FR-A- 2 737 435
- GB-A- 1 124 254
- GB-A- 2 275 017
- PATENT ABSTRACTS OF JAPAN vol. 008, no. 152 (M-309), 14. Juli 1984 (1984-07-14) & JP 59 048137 A (TOYODA GOSEI KK), 19. März 1984 (1984-03-19)

## Beschreibung

Die vorliegende Erfindung betrifft eine mehrfarbige, insbesondere zweifarbige Folie aus thermoplastischem Kunststoff und ein Verfahren bzw. eine Vorrichtung zur Herstellung der mehrfarbigen Kunststoffolie.

Zweifarbige Kunststoffolien werden z.B. in der Kraftfahrzeugtechnik als Verkleidungen und Oberflächen für Armaturenbretter, Formhimmel oder Türeninnenverkleidungen verwendet.

Eine solche zweifarbige Schalttafelfolie oder Armaturenbrettfolie wird in der DE 195 30 757 A1 beschrieben. Die bekannte Folie besteht aus einer Unterfolie und mindestens zwei Oberfolien, die eine unterschiedliche Farbgebung haben und nebeneinanderliegend auf die plane Unterschicht oder Unterfolie aufgebracht werden, um eine in der Ansicht zweifarbige Verbundfolie zu bilden. Die bekannte Schalttafelfolie wird durch Coextrusion oder Mehrfachextrusion der Unterschicht und der beiden Oberschichten hergestellt, wobei für jede der Schichten ein eigener Extruder verwendet wird. Die von den einzelnen Extrudern erzeugten plastifizierten Kunststoffschmelzen werden einem Adapterblock zugeführt, der die einzelnen Schichten zuerst getrennt formt, diese Schichten dann zusammenführt und die vereinigten Schichten schließlich über eine Breitschlitzdüse ausgibt. Um die bekannte zwei- oder mehrfarbige Kunststoffolie herzustellen, sind somit mindestens drei Extruder erforderlich, die gleichzeitig beschickt und kontrolliert werden müssen. Darüber hinaus erhöhen die große Anzahl von Grenzflächen, z.B. drei Grenzflächen bei einer zweifarbigen Folie, zwischen den verschiedenen Schichten, an denen z.B. unerwünschte Luft- oder Gasblasen beim Zusammenführen der Schichten eingeschlossen werden können, und andere Grenzflächenprobleme, die z.B. aufgrund geringfügiger Unterschiede der Eigenschaften der für die einzelnen Schichten verwendeten Kunststoffe auftreten können, die Ausschußquote bei der Herstellung der bekannten Folie.

Die JP-A-59048137 offenbart einen Zweifarben-Extruderkopf zur Herstellung zweifarbiger extrudierter Elemente. Bei dem Zweifarben-Extruderkopf handelt es sich um eine Koextrusionsvorrichtung, mittels der gleichzeitig zwei verschiedenfarbige Kunststoffmassen extrudiert werden können. Die Koextrusionseinrichtung weist zwei Führungen auf, welche beweglich sind, damit die Formen der extrudierten Massen in longitudinaler Richtung variieren. Die Aufgabe der vorliegenden Erfindung besteht darin, ein einfaches Verfahren zur Herstellung einer zwei- oder mehrfarbigen Verbundfolie aus thermoplastischem Kunststoff anzugeben, mit der die angeführten Nachteile des Standes der Technik überwunden werden können. Des weiteren ist es eine Aufgabe der vorliegenden Erfindung, eine Vorrichtung zur Durchführung des Verfahrens bereitzustellen. Eine weitere Aufgabe der Erfindung liegt in der Bereitstellung einer zwei- oder mehrfarbigen Verbundfolie aus thermoplastischem Kunststoff, die auf einfache Weise weiterverarbeitet werden kann.

Diese Aufgaben werden durch das Verfahren gemäß Anspruch 1 sowie durch die Vorrichtung gemäß Anspruch 7 gelöst.

Das erfindungsgemäße Verfahren gemäß Anspruch 1 zur Herstellung der mehrfarbigen, insbesondere zweifarbigen Verbundfolie der vorliegenden Erfindung umfaßt demnach die Herstellung einer Trägerfolie bzw. Trägerschicht durch Extrusion aus einem thermoplastischen Kunststoff, wobei die Trägerfolie bzw. Trägerschicht mindestens eine Vertiefung bzw. Aussparung oder Absenkung in ihrem Dickenprofil aufweist.

Als "Vertiefung" wird hier insbesondere jegliche Abweichung des Dickenprofils der Trägerschicht von der rechteckigen Form verstanden. Die Vertiefung kann z.B. die Form einer rechteckförmigen Aussparung oder eines rechteckigen Ausschnitts aus einem rechteckförmigen Umriß haben. Dabei geht der Querschnittsumriß an einer Oberseite der Trägerschicht in der Form einer Stufe in den abgesenkten Bereich der Aussparung über. Die Vertiefung kann einen einzigen geschlossenen Bereich der Trägerfolie einnehmen, sie kann aber auch mehrere voneinander getrennte Bereiche der Trägerfolie betreffen.

Gleichzeitig mit der Herstellung der Trägerschicht wird beim erfindungsgemäßen Verfahren mindestens eine Oberfolie bzw. Oberschicht zugeführt, wobei die Oberschicht bzw. die Oberschichten in die entsprechende Vertiefung der Trägerschicht einpaßt bzw. einpassen und derart in der Vertiefung der Trägerschicht oder Trägerfolie eingefügt wird bzw. werden, daß die so erhaltene mehrfarbige Kunststoffolie der Erfindung mit bündiger Oberfläche ausgebildet wird, wobei die Trägerschicht eine andere Farbe hat oder anders eingefärbt ist als die Oberschicht bzw. die Oberschichten. Es können auch mehrere Oberschichten bzw. Oberfolien aus unterschiedlich gefärbten Kunststoffen zugeführt werden.

Die mit diesem Verfahren hergestellte Kunststoffolie oder Tiefziehfolie hat eine Oberseite und besteht aus einem Verbund aus einer Trägerschicht bzw. Trägerfolie und mindestens einer Oberschicht bzw. Oberfolie, wobei die Oberschicht bzw. Oberfolie in eine Vertiefung der Trägerschicht oder Trägerfolie eingefügt ist und oberflächenbündig mit der Trägerschicht oder Trägerfolie ist und die Trägerschicht bzw. Trägerfolie und die Oberschicht bzw. Oberfolie jeweils einen Teil der Oberseite der Folie bilden und jeweils eine unterschiedlich Farbgebung aufweisen.

Die Folie hat vorzugsweise ein rechteckiges Dickenprofil, wobei die Vertiefung der Trägerfolie oder Trägerschicht eine rechteckige Aussparung ist und sich die in der rechteckigen Aussparung angeordnete Oberfolie bzw. Oberschicht an der Oberseite der Folie erstreckt.

Wenn man die Oberseite oder obere Oberfläche der fertiggestellten Folie der Erfindung betrachtet, sieht man z.B. bei einer zweifarbigen Folie einen Bereich mit einer ersten Farbe und einen Bereich mit einer zweiten Farbe. Der erste sichtbare Oberflächenbereich gehört z.B. zur Trägerschicht und der zweite sichtbare Oberflächenbereich ist dann Bestandteil der Oberfolie bzw. Oberschicht. Die erste Farbe kann eine dunklen, schwarzen bzw. grauen Farbton haben, während die zweite Farbe einen hellen bzw. weißen Farbton aufweisen kann.

Da die Trägerschicht oder Trägerfolie bei der Verwendung der erfindungsgemäßen Folie selbst sichtbar ist, wird durch die vorliegende Erfindung gegenüber dem Stand der Technik zumindest ein Extruder eingespart, wodurch ein aufwandsparenderes und einfacher zu kontrollierendes Verfahren zur Herstellung der erfindungsgemäßen mehrfarbigen Folie erreicht wird. Zudem wird weniger Ausschuß bei der Herstellung der erfindungsgemäßen Folie erzeugt, da z.B. bei einer zweifarbigen Folie, die gemäß der Erfindung aus einer Trägerschicht und nur einer Oberschicht zusammengesetzt ist, im Vergleich zum oben erläuterten Stand der Technik nur eine Grenzfläche vorhanden ist, was allgemein technologisch einfacher zu beherrschen ist und zu einer reduzierten Fehlerentstehung an den Grenzflächen beiträgt und damit auch zu einem geringen Ausschuß.

Schließlich sei noch darauf hingewiesen, daß die erfindungsgemäße Folie insgesamt eine verbesserte Beständigkeit bei der Verwendung bzw. Weiterverarbeitung zeigt, da durch die minimale Schichten- und Grenzflächenanzahl auch die Grenzflächenfehler minimal sind.

Vorzugsweise weisen der Kunststoff, aus dem die Trägerschicht bzw. Trägerfolie hergestellt wird, und der oder die Kunststoffe, aus dem die Oberschicht bzw. aus denen die Oberschichten hergestellt wird bzw. werden, bei gleichen Temperaturen etwa die gleiche Viskosität auf. Durch diese Eigenschaft wird ein stabiler Verbund der Trägerschicht und der mindestens einen Oberschicht bzw. Oberfolie bei der Herstellung der erfindungsgemäßen Folie erreicht.

Für das erfindungsgemäße Verfahren geeignete thermoplastische Kunststoffe sind u.a. Polyolefine, Vinylpolymere, Polyamide, Polyester, Polyacetate, Polycarbonate und zum Teil auch Polyurethane. Insbesondere bevorzugt werden Polyolefine.

Die Mehrfarbigkeit der erfindungsgemäßen Kunststoffolie kann durch eine entsprechend unterschiedliche Farbpigmentierung oder Farbstoffzumischung in die Kunststoffschmelzen der Trägerschicht bzw. Trägerfolie und der Oberschicht bzw. Oberschichten erreicht werden.

Die erfindungsgemäße Vorrichtung zum Herstellen der erfindungsgemäßen Folie mit zwei oder mehr Farben gemäß Anspruch 7 umfaßt eine Extrudereinrichtung zum Erzeugen einer plastifizierten Kunststoffschmelze, welche Extrudereinrichtung mit einem ersten Formwerkzeug zum Ausformen einer Trägerfolie bzw. Trägerschicht einer ersten Farbe unter Ausbildung mindestens einer Vertiefung versehen ist.
Sie kann weiterhin mindestens eine weitere Extrudereinrichtung zum Erzeugen mindestens einer weiteren plastifizierten Kunststoffschmelze aufweisen, wobei die mindestens eine weitere Extrudereinrichtung mit jeweils einem weiteren Formwerkzeug zum Ausformen jeweils einer Oberfolie bzw. Oberschicht, mit einer von der genannten ersten Farbe verschiedenen Farbe versehen ist, wobei das mindestens eine weitere Formwerkzeug so ausgebildet ist, daß die daraus ausgeformte Oberschicht bzw. Oberfolie jeweils in die entsprechende Vertiefung der Trägerschicht bzw. Trägerfolie oberflächenbündig einpaßt.

Die Vorrichtung weist außerdem ein Glättwerk zum oberflächenbündigen Verbinden der Trägerfolie bzw. Trägerschicht mit der mindestens einen in die entsprechende Vertiefung der Trägerschicht bzw. Trägerfolie eingefügten Oberschicht bzw. Oberfolie und zum Glätten der entstandenen Oberfläche auf.

Das erste Formwerkzeug hat eine schlitzartige Düse, in die ein Vorsprung hineinsteht, dessen quer zur Strömungsrichtung der Kunststoffschmelze verlaufender Querschnitt dem Querschnitt der Vertiefung der herzustellenden Trägerfolie entspricht.

Dieser Vorsprung kann einstellbar im ersten Formwerkzeug der erfindungsgemäßen Vorrichtung angeordnet sein, um die Form oder Abmessungen der Vertiefung in der Trägerfolie oder der Trägerschicht ändern oder einstellen zu können.

Der Vorsprung kann die Form einer relativ langgestreckten Lippe oder Lamelle haben, die sich über einen Teil des schlitzartigen Querschnitts der Düse des ersten Formwerkzeugs erstreckt. Hierdurch kann eine im Querschnitt rechteckförmige Vertiefung oder Aussparung in der Trägerschicht erzeugt werden.

Die Lippe kann höhenverstellbar und/oder längenverstellbar sein, um die Dicke oder Stärke der rechteckförmigen Aussparung bzw. die Breite der Aussparung und damit die Breite des Bereichs der erfindungsgemäßen Folie mit der zweiten Farbe festlegen bzw. variieren zu können.

Die Düse des zweiten Formwerkzeugs kann einen quer zur Strömungsrichtung der Kunststoffschmelze liegenden Querschnitt haben, der etwa dem Querschnitt des Vorsprungs oder der Lippe entspricht.

Vorzugsweise ist der lichte Querschnitt der Düse des zweiten bzw. jedes weiteren Formwerkzeugs entsprechend der gewählten Einstellung des Vorsprungs bzw. der Lippe des ersten Formwerkzeugs einstellbar oder variierbar, damit ein dem veränderten Querschnitt der Vertiefung der Trägerfolie entsprechend angepaßter lichter Querschnitt der Düse des zweiten bzw. jedes weiteren Formwerkzeugs eingestellt werden kann.

Gemäß einer weiteren vorteilhaften Ausführungsform ist mindestens eine Vorrichtung zum Vorwärmen mindestens einer der Folien bzw. Schichten vor dem Glättwerk vorgesehen. Die Temperatur dieser Heizvorrichtung wird in Abhängigkeit der Eigenschaften der zu erwärmenden Folie, wie z.B. Dicke und Art des thermoplastischen Kunststoffmaterials, gewählt. Das Vorwärmen erfolgt vorzugsweise durch ein IR-Strahlerfeld.

Weitere vorteilhafte Weiterbildungen der Erfindung sind den Unteransprüchen 2 bis 6, 8 bis 15 zu entnehmen.

Weitere Vorteile, vorteilhafte Weiterbildungen und Anwendungsmöglichkeiten der vorliegenden Erfindung sind der nachfolgenden Beschreibung von Ausführungsformen der Erfindung in Verbindung mit den beiliegenden Zeichnungen zu entnehmen. Es zeigen:
Figur 1 eine schematische Seitenansicht einer ersten Ausführungsform der erfindungsgemäßen Vorrichtung, in Richtung des Pfeiles I der Figur 2 gesehen;
Figur 2 eine Aufsicht in Richtung des Pfeiles II der Figur 1;
Figur 3 eine schematische Seitenansicht einer Vorrichtung, die nicht vom Schutzbereich der Erfindung umfaßt ist, in Richtung des Pfeiles III der Figur 4 gesehen;
Figur 4 eine Aufsicht in Richtung des Pfeiles IV der Figur 3;
Figur 5 einen schematischen Querschnitt des ersten Formwerkzeugs der erfindungsgemäßen Vorrichtung gemäß Figur 1, in Richtung des Pfeiles V der Figur 1 gesehen (um 90 Grad gegenüber der Lage in der Figur 1 im Uhrzeigersinn gedreht);
Figur 6 einen schematischen Querschnitt des zweiten Formwerkzeugs der erfindungsgemäßen Vorrichtung gemäß Figur 1, in Richtung des Pfeiles VI der Figur 1 gesehen;
Figur 7 eine schematische Querschnittsansicht einer ersten Ausführungsform der Folie, hergestellt mit der Vorrichtung der Figuren 1 und 2 oder der Vorrichtung der Figuren 3 und 4, in Richtung des Pfeiles VII der Figur 4 gesehen;
Figur 8 eine schematische Querschnittsansicht einer zweiten Ausführungsform der Folie mit zwei Farben, wobei die Trägerschicht als Steg zwischen der Oberschicht sichtbar ist; und
Figur 9 eine schematische Querschnittsansicht einer dritten Ausführungsform der Folie mit drei Farben, die als drei nebeneinanderliegende Bahnen oder Streifen sichtbar sind.

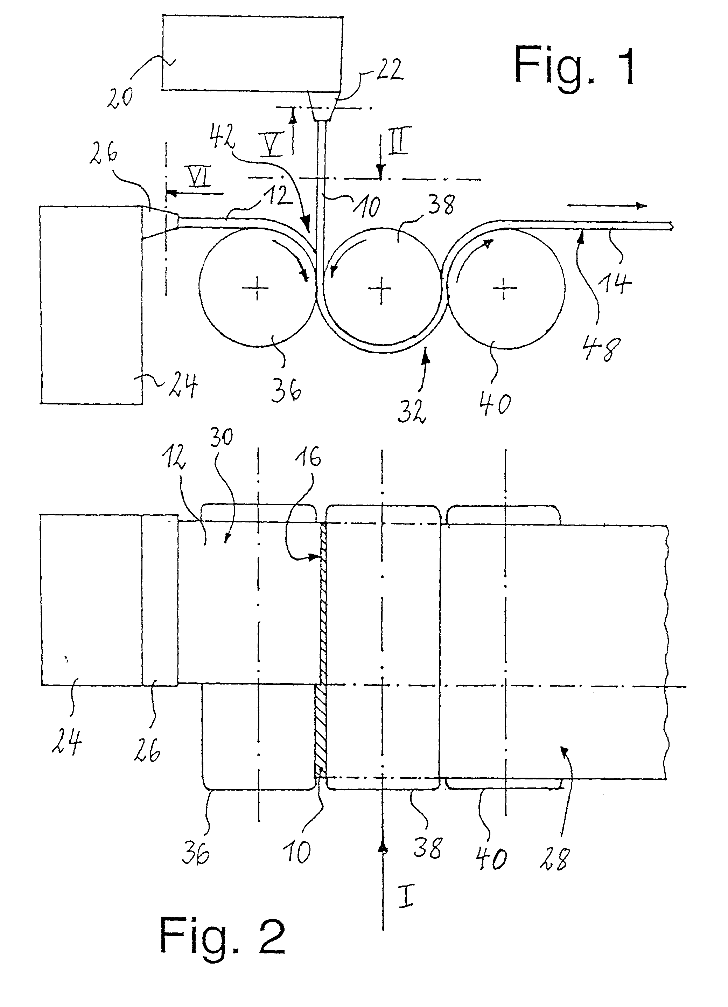

In den Figuren 1 und 2 ist eine erste Ausführungsform der erfindungsgemäßen Vorrichtung schematisch gezeigt, die im wesentlichen eine erste Extrudereinrichtung 20 oder einen Extruder mit einem ersten Formwerkzeug 22, eine zweite Extrudereinrichtung 24 mit einem zweiten Formwerkzeug 26 und ein Glättwerk 32 umfaßt. Die erste Ausführungsform der erfindungsgemäßen Vorrichtung ist zur Herstellung einer Folie 14 aus Kunststoff ausgelegt, die sich aus einer Trägerfolie bzw. Trägerschicht 10 und einer Oberschicht bzw. Oberfolie 12 zusammensetzt. Anstelle der zweiten Extrudereinrichtung 24 kann jedoch auch ein Vorrat einer bereits fertigen Oberschicht bzw. Oberfolie 12 vorgesehen sein.

Die erste Extrudereinrichtung 20 hat den üblichen Aufbau eines Extruders und umfaßt unter anderem eine Förderschnecke (nicht gezeigt), der eingangsseitig ein Kunststoffgranulat zugeführt wird, das bei der Förderung durch die Schnecke unter Zuführung von Wärme und durch den in der Schnecke aufgebauten Druck zu einer viskosen Formmasse plastifiziert und homogenisiert wird. Die Formmasse der Kunststoffschmelze wird vom Extruder 20 über ein erstes Formwerkzeug 22 mit integrierter Ausgangsdüse bzw. Breitschlitzdüse (nicht gezeigt) als Trägerfolie oder Trägerschicht 10 ausgestoßen. Die Trägerschicht 10 weist durch entsprechende Farbstoffzumischung oder Farbpigmentierung eine erste Farbe 28 auf, die z.B. einen dunklen, schwarzen oder grauen Farbton haben kann.

Die zweite Extrudereinrichtung 24 ist identisch oder ähnlich der ersten Extrudereinrichtung 20 aufgebaut und stößt eine Kunststoffschmelze bzw. Formmasse durch ein zweites Formwerkzeug 26 mit Ausgangsdüse (nicht gezeigt) als Oberfolie oder Oberschicht 12 aus, die eine zweite Farbe 30 mit einem anderen Farbton, z.B. einen hellen oder weißen Farbton, als die erste Farbe 28 hat.

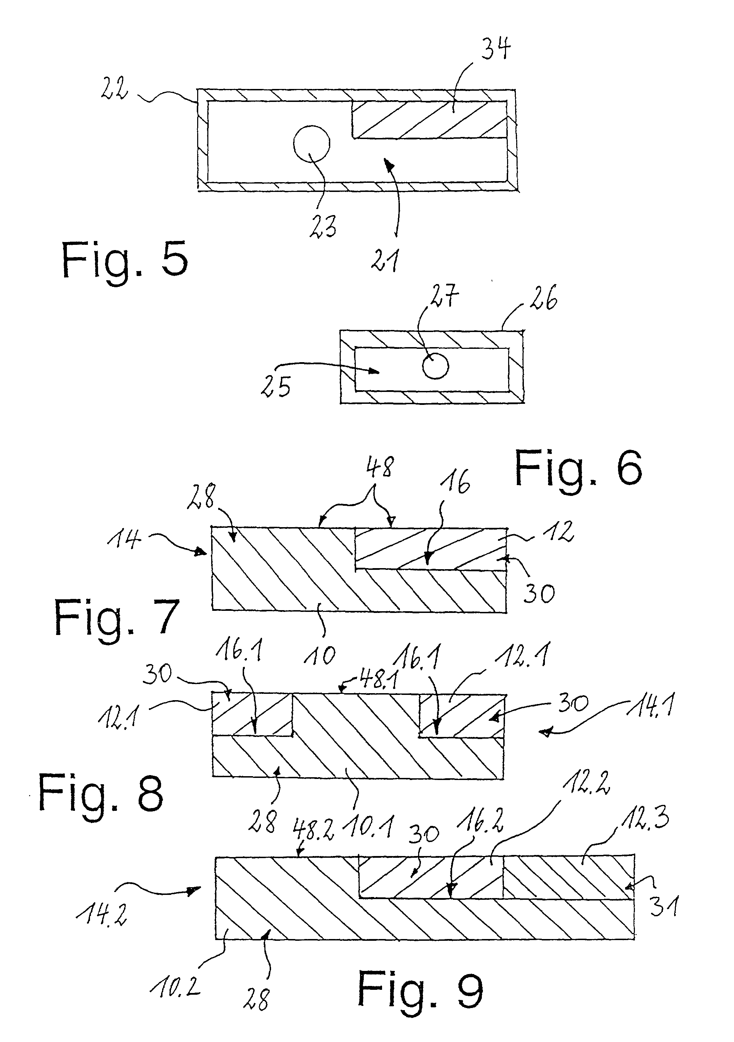

Das erste Formwerkzeug 22 ist an der ersten Extrudereinrichtung 20 angeordnet und ist in Figur 5 im Querschnitt gezeigt (vgl. V in der Figur 1). Das erste Formwerkzeug 22 hat eine formgebende Kammer 21, in die die Kunststoffschmelze von der Extrudereinrichtung 20 kommend über einen Kanal 23 eintritt und einen im allgemeinen rechteckigen, schlitzförmigen lichten Querschnitt. In die Kammer 21 ragt eine Lippe 34 als Vorsprung hinein, die einen rechtwinkligen Querschnitt hat und zur Formung einer rechtwinkligen Aussparung als Vertiefung 16 in der vom ersten Formwerkzeug 22 geformten Trägerschicht 10 dient. Die Kammer 21 des Formwerkzeugs 22 geht ausgangsseitig in Strömungsrichtung der Kunststoffschmelze gesehen in eine Ausgangsdüse (nicht gezeigt) über.

Das zweite Formwerkzeug 26 ist an der zweiten Extrudereinrichtung 24 angeordnet und ist im Querschnitt in Figur 6 gezeigt. Es hat eine formgebende Kammer 25, die einen rechtwinkligen lichten Querschnitt hat. Die Kammer 25 des zweiten Formwerkzeugs 26 ist eingangsseitig über einen Kanal 27 mit der Kunststoffschmelze bzw. Formmasse vom Extruder 24 beschickbar. Die Kammer 25 geht ausgangsseitig in die Ausstoßöffnung der Ausgangsdüse (nicht gezeigt) des Formwerkzeugs 26 über. Der rechtwinklige lichte Querschnitt der Kammer 25 des zweiten Formwerkzeugs 26 ist an den rechtwinkligen Querschnitt der in die Kammer 21 des ersten Formwerkzeugs 22 hineinragenden Lippe 34 angepaßt oder mit dieser deckungsgleich. Das zweite Formwerkzeug 26 erzeugt die Oberfolie bzw. Oberschicht 12 mit rechteckigem, schlitzartigen Dickenprofil.

Das Glättwerk 32 der ersten Ausführungsform der erfindungsgemäßen Vorrichtung umfaßt drei nebeneinander angeordnete, rotierende Walzen 36, 38 und 40. Der Rotationssinn der Walzen ist in Figur 1 mit entsprechenden Pfeilen eingezeichnet. Die erste Walze 36 rotiert im Uhrzeigersinn, wohingegen ihre benachbarte zweite Walze 38 entgegen dem Uhrzeigersinn rotiert. Zwischen der ersten Walze 36 und der zweiten Walze 38 ist ein Einzugsspalt 42 vorhanden, in dessen Bereich die erste Walze 36 und die zweite Walze 38 die Trägerschicht 10 und die Oberschicht 12 erfassen und einziehen. Wie in Figur 1 gezeigt ist, ist das erste Formwerkzeug 22 mit seiner Ausgangsöffnung oberhalb des Einzugsspalts 42 derart angeordnet, daß die von der Extrudereinrichtung 20 und dem Formwerkzeug 22 ausgestoßene Trägerschicht 10 von oben kommend vertikal bzw. senkrecht in den Einzugsspalt 42 eintritt. Die von der zweiten Extrudereinrichtung 24 und dem zweiten Formwerkzeug 26 ausgestoßene Oberschicht 12 erstreckt sich dagegen zuerst in einer horizontalen Ebene, wie in der Figur 1 gezeigt ist, und wird dann von der ersten Walze 36 mitgenommen und auf deren Walzenumfang aufliegend dem Einzugsspalt 42 zugeführt. Das zweite Formwerkzeug 26 ist derart angeordnet, daß die Oberschicht lagerichtig oder lageangepaßt zur Trägerschicht 10 in den Einzugsspalt 42 zwischen der ersten Walze 36 und der zweiten Walze 38 eintritt, wobei die Oberschicht 12 genau deckungsgleich in die rechteckigen Aussparung oder Vertiefung 16 der Trägerschicht 10 eintritt.

Die erste Walze 36 und die zweite Walze 38 fördern die aneinandergelegte Trägerschicht 10 und Oberschicht 12 weiter, bis der Folienverbund über die dritte Walze 40, die sich im Uhrzeigersinn dreht, das Glättwerk 32 wieder verläßt.

Durch die im Glättwerk vorherrschenden Temperaturen im Bereich zwischen etwa 40 bis 90°C und dem von den Walzen ausgeübten Druck werden die Folien zu einem festen Verbund verschweißt bzw. verklebt, und gleichzeitig wird die Oberfläche der entstehenden Verbundfolie geglättet.

Das erfindungsgemäße Verfahren, das mit der ersten Ausführungsform der erfindungsgemäßen Vorrichtung gemäß den Figuren 1 und 2 ausgeführt wird, beginnt demnach mit der Herstellung einer Trägerfolie bzw. Trägerschicht 10, die ein im wesentlichen rechteckförmiges, schlitzartiges Dickenprofil hat, in der eine Vertiefung 16, hier eine rechteckförmige Aussparung, entlang der gesamten Längsausdehnung der Trägerschicht 10 von der Lippe 34 des Formwerkzeugs 22 ausgebildet wird.

Gleichzeitig mit der Herstellung der Trägerschicht 10 wird eine Oberschicht 12 mittels Extrusion und Formgebung hergestellt, deren Dickenprofil rechteckförmig und schlitzartig ist. Die Oberschicht 12 paßt in die Vertiefung 16 bzw. rechteckförmige Aussparung der Trägerschicht 10 deckungsgleich ein.

Die Trägerschicht 10 und die Oberschicht 12 werden dann in einem Glättwerk 32 durch Druck- und Wärmeeinwirkung verbunden, so daß ein stabiler Verbund aus der Trägerschicht 10 und der Oberschicht 12 gebildet wird, der als erfindungsgemäße Verbundfolie 14 aus dem Glättwerk 32 ausgegeben wird. Die Aneinanderlagerung bzw. Vereinigung der Trägerschicht 10 und der Oberschicht 12 wird im Bereich des Einzugsspalts 42 des Glättwerks 32 durchgeführt, wobei die Trägerschicht 10 und auch die Oberschicht 12 schon vom geometrischen Ort ihrer Erzeugung oder Formgebung her derart dem Einzugsspalt 42 zugeführt werden, daß die Oberschicht 12 lagerichtig in die Vertiefung 16 oder rechteckförmige Aussparung der Trägerschicht 10 eingefügt oder eingebracht wird. Durch den von den Walzen ausgeübten Druck wird zusätzlich die Oberfläche der Verbundfolie geglättet.

Es ist möglich, auf dem Weg mindestens einer der Folien bzw. Schichten von der Extrudereinrichtung zum Glättwerk eine Vorrichtung zum Vorwärmen der entsprechenden Folie vorzusehen, um diese in geeigneter Weise für den anschließenden Prozeß des Verbindens bzw. Verklebens zu präparieren.

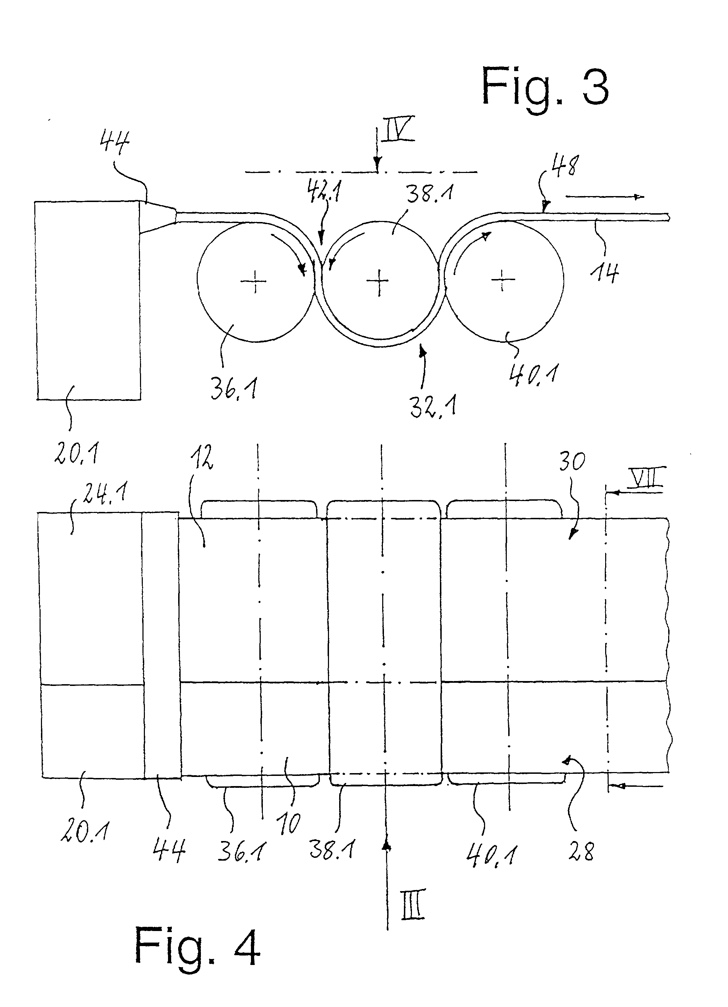

In den Figuren 3 und 4 ist eine Ausführungsform einer Vorrichtung schematisch gezeigt, welche nicht die erfindungsgemäße Lehre verkörpert. Die Ausführungsform umfaßt eine erste Extrudereinrichtung 20.1 und eine zweite Extrudereinrichtung 24.1 die denselben Aufbau und dieselbe Funktion wie die erste und zweite Extrudereinrichtung 20 und 24 der ersten Ausführungsform der Figuren 1 und 2 haben.

Ausgangsseitig sind die Extrudereinrichtungen 20.1 und 24.1 mit einem Formblock 44, der an den beiden Extrudereinrichtungen 20.1 und 24.1 angeordnet ist, strömungsmäßig verbunden. Der Formblock 44 umfaßt in integrierter Weise das erste Formwerkzeug 22 gemäß Figur 5 der ersten Ausführungsform und auch das zweite Formwerkzeug 26 der ersten Ausführungsform der erfindungsgemäßen Vorrichtung. In den Formblock 44 ist jedoch das zweite Formwerkzeug 26 der Figur 6 anstelle der Lippe 34 des ersten Formwerkzeugs 22 der Figur 5 integriert (nicht gezeigt), um im Formblock 44 sowohl die Trägerschicht 10 mit rechteckförmiger Aussparung als auch die Oberschicht 12 mit rechteckförmigem, schlitzartigen Querschnitt 12 zu erzeugen und zusammenzuführen. Aus einer Ausgangsdüse (nicht gezeigt) des Formblocks 44 tritt dann bereits ein Verbund aus Trägerschicht 10 und Oberschicht 12 aus.

Wie in Figur 3 zu sehen ist, wird dieser Verbund aus Trägerschicht 10 und Oberschicht 12 von dem Formblock 44 kommend dem Glättwerk 32.1 zugeführt, das wiederum drei nebeneinander angeordnete Walzen 36.1, 38.1 und 40.1 hat, deren Achsen parallel zueinander sind und in einer gemeinsamen horizontalen Ebene liegen. Der aus dem Formblock austretende Verbund erreicht die erste Walze 36.1 in horizontaler Ausrichtung und wird dann auf einem Teil des Walzenumfangs der ersten Walze 36.1 in einen Einzugsspalt 42.1 eingeführt. Die erste Walze 36.1 und die zweite Walze 38.1 erfassen den Verbund und fördern ihn weiter in den Spalt zwischen der zweiten Walze 38.1 und der dritten Walze 40.1, die die Folien nach Verbinden bzw. Verkleben und Glätten der entstehenden Oberfläche als Verbundfolie 14 ausgibt.

Die erzeugte Folie 14 ist wiederum zweifarbig. Sie zeigt an ihrer Oberseite 48 eine erste Farbe 28, mit der die Trägerschicht 10 eingefärbt ist, und eine zweite Farbe 30, mit der die Oberschicht 12 eingefärbt ist.

Bei dem Verfahren, das mit der Vorrichtung gemäß den Figuren 3 und 4 ausgeführt wird, werden im Unterschied zur ersten Ausführungsform gemäß der Figuren 1 und 2 die Trägerschicht 10 und die Oberschicht 12 nicht erst in dem Einzugsspalt 42.1 des Glättungswerks 32.1 der zweiten Ausführungsform aneinandergelegt sondern bereits unmittelbar nach der Formgebung der Trägerschicht 10 und der Oberschicht 12 im integrierten Formblock 44, um bereits als Verbund den Formblock 44 zu verlassen. Dieser Verbund aus Trägerschicht 10 und Oberschicht 12 wird dann in den Einzugsspalt 42.1 des Glättungswerks 32.1 eingezogen und weiterverarbeitet, so daß nach der Glättung eine Kunststoffolie 14 erhalten wird, die identisch zu der mit der ersten Ausführungsform der erfindungsgemäßen Vorrichtung gemäß den Figuren 1 und 2 hergestellten Kunststoffolie ist.

Der Aufbau der mit der ersten Ausführungsform der erfindungsgemäßen Vorrichtung hergestellten Folie 14 aus thermoplastischem Kunststoff ist in Figur 7 schematisch im Querschnitt gezeigt. In Figur 7 ist deutlich zu sehen, daß die Trägerschicht 10 der Folie 14 bis zur Oberseite 48 der Folie 14 und auch die Oberschicht 12, die in die Vertiefung 16 oder in die rechteckförmige Aussparung der Trägerschicht 10 eingefügt ist, bis zur Oberseite 48 der Folie 14 reicht. Die Oberschicht 12 und die Trägerschicht 10 sind an der Oberseite 48 der Folie 14 oberflächenbündig. Da die Trägerschicht 10 die erste Farbe 28 hat und die Oberschicht 12 die zweite Farbe 30 hat, die voneinander verschieden sind, ist die Oberseite 48 der Folie 14 für einen Betrachter zweifarbig.

In Figur 8 ist eine zweite beispielhafte Ausführungsform der Folie aus Kunststoff gezeigt. Die Folie 14.1 der zweiten Ausführungsform umfaßt wiederum eine Trägerschicht 10.1 mit einer Farbe 28 und eine Oberschicht 12.1, die aus zwei parallel zueinander verlaufenden, jedoch voneinander getrennten Streifen an der Oberseite 48.1 der Folie 14.1 besteht. Die Streifen der Oberschicht 12.1 sind in entsprechend rechteckförmigen Aussparungen bzw. Vertiefungen 16.1 angeordnet bzw. eingepaßt. Auch bei der Folie 14.1 reicht die Trägerschicht bis zur Oberseite 48.1 der Folie 14.1. Für die Herstellung der Folie 14.1 sind die verwendeten Formwerkzeuge zur Formgebung der Trägerschicht 10.1 und der Oberschicht 12.1 entsprechend ausgelegt.

In Figur 9 ist eine dritte beispielhafte Ausführungsform der Folie gezeigt. Die Folie 14.2 umfaßt wiederum eine Trägerschicht 10.2, die eine Vertiefung 16.2 bzw. eine rechteckförmige Aussparung hat. In dieser Vertiefung 16.2 sind nebeneinander eine erste rechtwinklige Oberschicht 12.2 und eine zweite rechtwinklige Oberschicht 12.3 eingefügt bzw. eingepaßt. Die Trägerschicht hat die Farbe 28, die erste Oberschicht 12.2 hat die Farbe 30 und die zweite Oberschicht 12.3 hat die Farbe 31. Die Farben 28, 30, 31 sind voneinander verschieden. Die Trägerschicht 10.2 reicht wiederum bis zur Oberseite 48.2 der Folie 14.2, wobei die Trägerschicht 10.2, die erste Oberschicht 12.2 und die zweite Oberschicht 12.3 an der Oberseite 48.2 oberflächenbündig sind. Die Folie 14.2 hat somit an der Oberseite 48.2 ein dreifarbiges Aussehen.

## Patentansprüche

1. Verfahren zur Herstellung einer mehrfarbigen, insbesondere zweifarbigen Verbundfolie (14; 14.1; 14.2) aus thermoplastischem Kunststoff, aufweisend die folgenden Verfahrensschritte :
Herstellen einer Trägerfolie bzw. Trägerschicht (10; 10.1; 10.2) einer ersten Farbe durch Extrusion aus einem thermoplastischen Kunststoff unter Ausbildung mindestens einer Vertiefung (16; 16.1; 16.2) im Dickenprofil der Trägerfolie bzw. Trägerschicht;
Zuführen mindestens einer Oberfolie bzw. Oberschicht (12; 12.1; 12.2, 12.3), deren Farbe von der genannten ersten Farbe verschieden ist, wobei die mindestens eine Oberschicht so ausgeformt ist, daß sie in die Vertiefung der Trägerschicht bzw. Trägerfolie (10; 10.1; 10.2) oberflächenbündig einpaßt; und
Einfügen der mindestens einen Oberfolie bzw. Oberschicht in die entsprechende Vertiefung der Trägerschicht bzw. Trägerfolie und Verbinden der Schichten unter Wärme- und Druckeinwirkung, **dadurch gekennzeichnet, dass**
gleichzeitig ein Glätten der entstehenden Oberfläche erfolgt, so daß eine mehrfarbige Verbundfolie (14; 14.1; 14.2) mit bündiger Oberfläche ausgebildet wird, wobei das Einfügen des mindestens einen Oberfolie bzw. Oberschicht nach der Extrusion der Trägerfolie bzw. Trägerschicht erfolgt.

2. Verfahren nach Anspruch 1, **dadurch gekennzeichnet, daß** die Oberfolie bzw. Oberschicht (12) gleichzeitig mit der Trägerfolie bzw. Trägerschicht (10) hergestellt wird.

3. Verfahren nach Anspruch 1 oder Anspruch 2, **dadurch gekennzeichnet, daß** die Trägerfolie bzw. Trägerschicht (10) mit einem rechteckigen Dickenprofil und mit einer Vertiefung (16) in Form einer Aussparung mit rechteckförmigem Querschnitt ausgebildet wird und daß die Oberschicht bzw. Oberfolie (12) mit einem Dickenprofil von der Form und Größe der rechteckigen Aussparung der Trägerschicht bzw. Trägerfolie (10) ausgebildet ist.

4. Verfahren nach mindestens einem der Ansprüche 1 bis 3, **dadurch gekennzeichnet, daß** die Trägerschicht bzw. Trägerfolie (10; 10.1; 10.2) und die mindestens eine Oberschicht bzw. Oberfolie (12; 12.1; 12.2, 12.3) aus thermoplastischen Kunststoffen hergestellt werden, deren Viskositäten einander bei gleichen Temperaturen etwa entsprechen.

5. Verfahren nach einem der Ansprüche 1 bis 4, **dadurch gekennzeichnet, daß** mindestens eine der Folien bzw. Schichten vor dem Schritt des Zusammenfügens und Verbindens vorgewärmt wird.

6. Verfahren nach einem der Ansprüche 1 bis 5, **dadurch gekennzeichnet, daß** die Oberfläche der Verbundfolie mindestens ein weiteres Mal geglättet wird.

7. Vorrichtung zum Herstellen einer mehrfarbigen, insbesondere zweifarbigen Verbundfolie (14; 14.1; 14.2), aufweisend:
eine erste Extrudereinrichtung (20; 20.1) zum Erzeugen einer plastifizierten Kunststoffschmelze, welche Extrudereinrichtung mit einem ersten Formwerkzeug (22) zum Ausformen einer Trägerfolie bzw. Trägerschicht (10; 10.1; 10.2) einer ersten Farbe (28) unter Ausbildung mindestens einer Vertiefung (16; 16.1; 16.2) versehen ist; **dadurch gekennzeichnet, dass** sie folgendes aufweist:
ein Glättwerk (32; 32.1) zum oberflächenbündigen Verbinden der Trägerfolie bzw. Trägerschicht (10; 10.1; 10.2) mit mindestens einer in die entsprechende Vertiefung (16; 16.1, 16.2) der Trägerschicht bzw. Trägerfolie (10; 10.1; 10.2) eingefügten Oberschicht bzw. Oberfolie (12; 12.1; 12.2, 12.3) einer von der genannten ersten Farbe verschiedenen Farbe (31) und zum Glätten der entstandenen Oberfläche, wobei das erste Formwerkzeug (22) eine schlitzartige Düse aufweist, in die ein Vorsprung hineinsteht, dessen quer zur Strömungsrichtung der Kunststoffschmelze verlaufender Querschnitt dem Querschnitt der Vertiefung (16; 16.1; 16.2) der hergestellten Trägerschicht bzw. Trägerfolie (10; 10.1; 10.2) entspricht.

8. Vorrichtung nach Anspruch 7, **dadurch gekennzeichnet, daß** mindestens eine weitere Extrudereinrichtung (24; 24.1) zum Erzeugen mindestens einer weiteren plastifizierten Kunststoffschmelze vorgesehen ist, wobei die mindestens eine weitere Extrudereinrichtung mit jeweils einem weiteren Formwerkzeug (26) zum Ausformen der Oberfolie bzw. Oberschicht (12; 12.1, 12.2) versehen ist, wobei das mindestens eine weitere Formwerkzeug so ausgebildet ist, daß die daraus ausgeformte Oberschicht bzw. Oberfolie (12) jeweils in die entsprechende Vertiefung (16; 16.1, 16.2) der Trägerschicht bzw. Trägerfolie (10) oberflächenbündig einpaßt.

9. Vorrichtung nach Anspruch 7 oder 8, **dadurch gekennzeichnet, daß** der Vorsprung einstellbar im ersten Formwerkzeug (22) angeordnet ist, um die Form und Größe der Vertiefung (16; 16.1; 16.2) in der Trägerfolie bzw. der Trägerschicht einstellen zu können.

10. Vorrichtung nach einem der Ansprüche 7 bis 9, **dadurch gekennzeichnet, daß** der Vorsprung die Form einer langgestreckten Lippe (34) oder Lamelle hat.

11. Vorrichtung nach Anspruch 10, **dadurch gekennzeichnet, daß** die Lippe (34) höhenverstellbar und/oder längenverstellbar ist.

12. Vorrichtung nach einem der Ansprüche 7 bis 11, **dadurch gekennzeichnet, daß** das mindestens eine weitere Formwerkzeug (26) eine Düse aufweist, deren lichter Querschnitt etwa dem Querschnitt des Vorsprungs des ersten Formwerkzeugs (22) entspricht.

13. Vorrichtung nach Anspruch 12, **dadurch gekennzeichnet, daß** die Düse des mindestens eine weitere Formwerkzeugs (26) einen schlitzartigen Querschnitt hat.

14. Vorrichtung nach einem der Ansprüche 7 bis 13, **dadurch gekennzeichnet, daß** das Glättwerk (32; 32.1) mehrere, insbesondere drei, hintereinander angeordnete Walzen (36, 38, 40; 36.1, 38.1, 40.1) aufweist, deren Achsen in einer Ebene liegen, wobei mindestens zwei der Walzen des Glättwerks die Trägerschicht bzw. Trägerfolie und die mindestens eine Oberfolie bzw. Oberschicht in einem Einzugsspalt (42; 42.1) erfassen.

15. Vorrichtung nach einem der Ansprüche 7 bis 14, **dadurch gekennzeichnet, daß** mindestens eine Vorrichtung zum Vorwärmen mindestens einer des Folien bzw. Schichten vor dem Glättwerk vorgesehen ist.

## Claims

1. Method of producing a multi-coloured, particularly two-coloured, composite film (14; 14.1; 14.2) of thermoplastic plastics material including the following:
producing a carrier film or carrier layer (10; 10.1; 10.2) of a first colour by extrusion from a first thermoplastic plastic material whilst forming at least one recess (16; 16.1; 16.2) in the thickness profile of the carrier film or carrier layer;
supplying at least one upper film or upper layer (12; 12.1; 12.2, 12.3), the colour of which is different from the first said colour, whereby the at least one upper layer is so shaped that it fits with a flush surface into the recess in the carrier layer or carrier film (10; 10.1; 10.2); and
inserting the at least one upper film or upper layer into the corresponding recess in the carrier layer or carrier film and connecting the layers under the action of heat and pressure, **characterised in that**
the upper surface which is produced is simultaneously smoothed so that a multi-coloured composite film (14; 14.1; 14.2) with a flush surface is formed, whereby the insertion of the at least one upper film or upper layer is effected after the extrusion of the carrier film or carrier layer.

2. Method as claimed in Claim 1, **characterised in that** the upper film or upper layer (12) is produced simultaneously with the carrier film or carrier layer (10).

3. Method as claimed in Claim 1 or 2, **characterised in that** the carrier film or carrier layer (10) is formed with a rectangular thickness profile and with a recess (16) in the form of a hollow with a rectangular cross-section and that the upper layer or upper film (12) is formed with a thickness profile of the shape and size of the rectangular hollow in the carrier layer or carrier film (10).

4. Method as claimed in at least one of Claims 1 to 3, **characterised in that** the carrier layer or carrier film (10; 10.1; 10.2) and the at least one upper layer or upper film (12; 12.1; 12.2, 12.3) are produced from thermoplastic plastic materials, the viscosities of which approximately correspond to one another at the same temperatures.

5. Method as claimed in one of Claims 1 to 4, **characterised in that** at least one of the films or layers is pre-heated before the step of joining and connecting.

6. Method as claimed in one of Claims 1 to 5, **characterised in that** the surface of the composite film is smoothed at least one further time.

7. Apparatus for producing a multi-coloured, particularly two-coloured, composite film (14; 14.1; 14.2) including:
a first extruder (20; 20.1) for producing a plasticized plastic melt, which extruder is provided with a first moulding tool (22) for shaping a carrier film or carrier layer (10; 10.1; 10.2) of a first colour whilst forming at least one recess (16; 16.1; 16.2); **characterised in that** it has the following:
a smoothing tool (32; 32.1) for connecting the carrier film or carrier layer (10; 10.1; 10.2) with a flush surface to at least one upper layer or upper film (12; 12.1; 12.2, 12.3), inserted into the corresponding recess (16; 16.1, 16.2) in the carrier layer or carrier film (10; 10.1; 10.2), of a colour (31) different to the said first colour and for smoothing the resulting surface, whereby the first moulding tool (22) has a slit-like nozzle, into which a projection extends, the cross-section of which extending transverse to the flow direction of the plastic melt corresponds to the cross-section of the recess (16; 16.1; 16.2) of the carrier layer or carrier film (10; 10.1; 10.2), which is produced.

8. Apparatus as claimed in Claim 7, **characterised in that** at least one further extruder (24; 24.1) is provided for producing at least one further plasticized plastic melt, the at least one further extruder being provided with a respective further moulding tool (26) for shaping the upper film or upper layer (12; 12.1, 12.2), the at least one further moulding tool being so constructed that the upper layer or upper film (12) formed in it fits into the corresponding recess (16; 16:1, 16.2) in the carrier layer or carrier film (10) with a flush surface.

9. Apparatus as claimed in Claim 7 or 8, **characterised in that** the projection is adjustably disposed in the first moulding tool (22) in order to be able to adjust the shape and size of the recess (16; 16.1; 16.2) in the carrier film or carrier layer.

10. Apparatus as claimed in one of Claims 7 to 9, **characterised in that** the projection has the shape of an elongate lip (34) or plate.

11. Apparatus as claimed in Claim 10, **characterised in that** the lip (34) is vertically movable and/or longitudinally movable.

12. Apparatus as claimed in one of Claims 7 to 11, **characterised in that** the at least one further moulding tool (26) has a nozzle, the free cross-section of which approximately corresponds to the cross-section of the projection on the first moulding tool (22).

13. Apparatus as claimed in Claim 12, **characterised in that** the nozzle of the at least one further moulding tool (26) has a slit-shaped cross-section.

14. Apparatus as claimed in one of Claims 7 to 13, **characterised in that** the smoothing tool (32; 32.1) has a plurality, in particular three, of rollers (36, 38, 40; 36.1, 38.1, 40.1), which are arranged behind one another and the axes of which lie in a plane, whereby at least two of the rollers of the smoothing tool grip the carrier layer or carrier film and the at least one upper film or upper layer in an entry gap (42; 42.1).

15. Apparatus as claimed in one of Claims 7 to 14, **characterised in that** at least one device for preheating at least one of the films or layers is provided before the smoothing tool.

## Revendications

1. Procédé destiné à la fabrication d'un film composite (14 ; 14.1 ; 14.2) en matière thermoplastique multicolore, notamment bicolore, comportant les étapes suivantes :
fabrication d'un film de support ou d'une couche de support (10 ; 10.1 ; 10.2) d'une première couleur par extrusion à partir d'une matière thermoplastique, avec formation d'au moins un renfoncement (16 ; 16.1 ; 16.2) dans le profil d'épaisseur du film de support ou de la couche de support ;
amenée d'au moins un film supérieur ou une couche supérieure (12 ; 12.1 ; 12.2, 12.3) dont la couleur est différente de la première couleur mentionnée, la couche supérieure au moins étant formée de telle sorte qu'elle s'adapte avec alignement de surfaces dans le renfoncement de la couche de support ou du film de support (10 ; 10.1 ; 10.2) ; et
insertion du film supérieur ou de la couche supérieure au moins dans le renfoncement correspondant de la couche de support ou du film de support, et liaison des couches par effet de chaleur et de pression, **caractérisé en ce que**
la surface en voie de formation est simultanément lissée, de façon à former un film composite (14 ; 14.1 ; 14.2) multicolore à surface alignée, l'insertion du film de support ou de la couche de support au moins étant effectuée après l'extrusion du film de support ou de la couche de support.

2. Procédé selon la revendication 1, **caractérisé en ce que** le film supérieur ou la couche supérieure (12) est fabriqué simultanément avec le film de support ou la couche de support (10).

3. Procédé selon la revendication 1 ou la revendication 2, **caractérisé en ce que** le film de support ou la couche de support (10) est réalisé avec un profil d'épaisseur rectangulaire, et avec un renfoncement (16) sous la forme d'un évidement de section transversale rectangulaire, et **en ce que** la couche supérieure ou le film supérieur (12) est réalisée avec un profil d'épaisseur ayant la forme et la taille de l'évidement rectangulaire de la couche de support ou du film de support (10).

4. Procédé selon l'une au moins des revendications 1 à 3, **caractérisé en ce que** la couche de support ou le film de support (10 ; 10.1 ; 10.2), et la couche supérieure ou le film supérieur (12 ; 12.1 ; 12.2, 12.3) au moins, sont fabriquées à partir de matières thermoplastiques dont les viscosités à températures identiques correspondent sensiblement entre elles.

5. Procédé selon l'une quelconque des revendications 1 à 4, **caractérisé en ce que** l'un au moins des films ou des couches est préchauffé avant l'étape d'assemblage et de liaison.

6. Procédé selon l'une quelconque des revendications 1 à 5, **caractérisé en ce que** la surface du film composite est lissée au moins une autre fois.

7. Dispositif destiné à la fabrication d'un film composite (14 ; 14.1 ; 14.2) multicolore, notamment bicolore, comportant :
un premier dispositif d'extrusion (20 ; 20.1) destiné à engendrer une masse plastifiée de matière plastique fondue, lequel dispositif d'extrusion est muni d'un premier outil de conformation (22) pour la conformation d'un film de support ou d'une couche de support (10 ; 10.1 ; 10.2) d'une première couleur (28) avec formation d'au moins un renfoncement (16 ; 16.1 ; 16.2), **caractérisé en ce qu'**il comporte ce qui suit :
un mécanisme de lissage (32 ; 32.1) pour la liaison à alignement des surfaces du film de support ou de la couche de support (10 ; 10.1 ; 10.2) à au moins une couche supérieure ou un film supérieur (12 ; 12.1 ; 12.2, 12.3) d'une couleur (31) différente de la première couleur citée, qui est insérée dans le renfoncement correspondant (16 ; 16.1, 16.2) de la couche de support ou du film de support (10 ; 10.1 ; 10.2) et pour le lissage de la surface engendrée, le premier outil de conformation (22) comportant une tuyère de type fente dans laquelle une partie fait saillie vers l'intérieur, dont la section transversale s'étendant transversalement au sens d'écoulement de la masse fondue de matière plastique correspond à la section transversale du renfoncement (16 ; 16.1 ; 16.2) de la couche de support ou du film de support (10 ; 10.1 ; 10.2) fabriquée.

8. Dispositif selon la revendication 7, **caractérisé en ce qu'**il est prévu au moins un autre dispositif d'extrusion (24 ; 24.1) destiné à engendrer au moins une autre masse plastifiée de matière plastique fondue, cet autre dispositif d'extrusion au moins étant muni d'un autre outil de conformation (26) pour la conformation du film supérieur ou de la couche supérieure (12 ; 12.1, 12.2), l'autre outil de conformation au moins étant réalisé de telle sorte que la couche supérieure ou le film supérieur (12) formée s'adapte avec alignement des surfaces dans le renfoncement (16 ; 16.1 ; 16.2) de la couche de support ou du film de support (10).

9. Dispositif selon la revendication 7 ou 8,
**caractérisé en ce que** la partie en saillie est disposée de façon réglable dans le premier outil de conformation (22), afin de pouvoir régler la forme et la taille du renfoncement (16 ; 16.1 ; 16.2) dans le film de support ou la couche de support.

10. Dispositif selon l'une quelconque des revendications 7 à 9, **caractérisé en ce que** la partie en saillie a la forme d'une lèvre (34) très allongée ou d'une lamelle.

11. Dispositif selon la revendication 10, **caractérisé en ce que** la lèvre (34) est réglable en hauteur et/ou en longueur.

12. Dispositif selon l'une quelconque des revendications 7 à 11, **caractérisé en ce que** l'autre outil de conformation (26) au moins comporte une tuyère, dont la section transversale de passage correspond sensiblement à la section transversale de la partie en saillie du premier outil de conformation (22).

13. Dispositif selon la revendication 12, **caractérisé en ce que** la section transversale de la tuyère de l'autre outil de conformation (26) au moins est de type fente.

14. Dispositif selon l'une quelconque des revendications 7 à 13, **caractérisé en ce que** le mécanisme de lissage (32 ; 32.1) comporte plusieurs cylindres (36, 38, 40 ; 36.1, 38.1, 40.1), notamment trois, disposés les uns derrière les autres, dont les axes sont situés dans un plan, au moins deux des cylindres du mécanisme de lissage saisissant la couche de support ou le film de support et le film supérieur ou la couche supérieure au moins dans une fente de retrait (42 ; 42.1).

15. Dispositif selon l'une quelconque des revendications 7 à 14, **caractérisé en ce qu'**il est prévu au moins un dispositif pour le préchauffage de l'un des films ou l'une des couches au moins en amont du mécanisme de lissage.
